# EUROPÄISCHE PATENTANMELDUNG

(11) **EP 3 576 256 A1**
(43) Veröffentlichungstag der Anmeldung: **04.12.2019**
(21) Anmeldenummer: 18174811.2
(22) Anmeldetag: 29.05.2018
(51) Int. Cl.: H02K 3/22, H02K 3/24, H02K 17/16

(54) **ELEKTRISCHER LEITER MIT GITTERSTRUKTUR UND HERSTELLUNGSVERFAHREN**

(71) Anmelder: Siemens Aktiengesellschaft, 80333 München (DE)
(72) Erfinder: Brandl, Konrad, 93107 Thalmassing (DE)

(57) **Zusammenfassung**

Zur Steigerung des Wirkungsgrads elektrischer Maschinen wird ein elektrischer Leiter (1) mit einem Leitungskörper (2), der aus einem elektrisch leitenden Material gefertigt ist, und einer Kühlmittelleiteinheit, die zumindest teilweise in den Leitungskörper (2) integriert ist, vorgeschlagen. Der Leitungskörper (2) ist zumindest teilweise gitterförmig ausgebildet. Die Kühlmittelleiteinheit ist zum Teil durch einen oder mehrere Hohlräume des gitterförmigen Leitungskörpers (2) gebildet. Außerdem weist die Kühlmittelleiteinheit eine dichte Wandung (10) auf, die bereichsweise einen Kühlmittelaustritt aus dem Leitungskörper (2) verhindert.

## Beschreibung

Die vorliegende Erfindung betrifft einen elektrischer Leiter für eine elektrische Maschine mit einem Leitungskörper, der aus einem elektrisch leitenden Material gefertigt ist, und einer Kühlmittelleiteinheit, die zumindest teilweise in den Leitungskörper integriert ist. Darüber hinaus betrifft die vorliegend Erfindung ein Verfahren zur Herstellung einer elektrischen Maschine durch Bereitstellen eines Eisenkerns mit Nuten, Herstellen eines elektrischen Leiters mit einem Leitungskörper, der aus einem elektrischen leitenden Material gefertigt wird, und einer Kühlmittelleiteinheit, die zumindest teilweise in den Leitungskörper integriert ist, und Einbringen des elektrischen Leiters in eine oder mehrere der Nuten.

In elektrischen Maschinen, wie etwa Motoren, Generatoren und Transformatoren, werden elektrische Leiter zum Erzeugen eines Magnetfelds meist in Eisenkerne eingelegt. Insbesondere werden häufig Spulen beziehungsweise Leiterstäbe in Nuten der meist geblechten Eisenkerne eingelegt.

An die elektrischen Leiter für die elektrischen Maschinen werden häufig zahlreiche, zum Teil erheblich gegensätzliche Anforderungen gestellt. Beispielsweise müssen die elektrischen Leiter gut kühlbar sein beziehungsweise eine hohe Wärmeleitfähigkeit besitzen. Außerdem sollten sie gegebenenfalls mechanisch stabil (zum Beispiel im Wickelkopfbereich) sein. Weiterhin sind möglichst geringe und vorzugsweise nur ohmsche Verluste (zum Beispiel keine Wirbelstromverluste) wünschenswert. In der Regel sollte aber auch eine hohe elektrische Leitfähigkeit des elektrischen Leiter gegeben sein. Bei den gegenwärtigen Ausführungen von Kupfer- oder Aluminiumleitern sind die zum Teil gegenständlichen Anforderungen nur sehr eingeschränkt beziehungsweise nur mit hohem konstruktiven und/oder fertigungstechnischen Aufwand umsetzbar.

Wie erwähnt besteht eine wesentliche Anforderung häufig darin, eine effiziente Kühlung des elektrischen Leiter insbesondere im Betrieb der elektrischen Maschine zu gewährleisten. Um eine hohe Leistungsdichte und damit eine kompakte Bauweise für elektrische Maschinen zu erhalten, sind die Wicklungen in der Regel zu kühlen. Am häufigsten wird dabei die indirekte Luftkühlung angewandt. Die elektrischen Leiter sind dazu von einer Isolationshülle umgeben und in Nuten eingebettet. Die im Leiter entstehende Verlustwärme wird mittels Wärmeleitung an das umgebende Eisen und von dort an Kühlrippen oder ein Wassermantelgehäuse transportiert, vom Kühlmittel aufgenommen und abgeführt. In der Wicklung selbst sind dabei meist keine Kühlleitungen vorgesehen.

Deutlich höhere Leistungsdichten werden erreicht, wenn das Kühlmittel direkt die elektrischen Leiter anströmen kann. Eine Wärmeleitung über zum Teil erhebliche Weglängen und schlechte Wärmeleiter (zum Beispiel Isoliermaterial) entfällt hierbei. Meist wird das direkte Anströmen des elektrischen Leiters durch das Kühlmittel dadurch realisiert, dass der elektrische Leiter mit entsprechenden Kühlleitungen durchzogen ist. Als Kühlmittel werden häufig Gase (zum Beispiel Luft, Wasserstoff, Helium) oder nichtleitendes Wasser beziehungsweise Isolieröl eingesetzt.

Weitere wichtige Anforderungen ergeben sich, wie oben dargestellt wurde, hinsichtlich elektrischer Verluste insbesondere in Bezug auf Wirbelströme. Durch den Einsatz von Wechselstrom werden in den ausgedehnten Leitern, die somit einem sich zeitlich ändernden Magnetfeld ausgesetzt sind, Wirbelströme induziert. Die Wirbelströme sind direkt proportional zum Querschnitt des Leiters und der Frequenz des Wechselstroms und wirken wie eine Widerstandserhöhung. Um diese mitunter beträchtlichen zusätzlichen Wirbelstromverluste zu minimiere, werden die massiven Leiter häufig in parallele Teilleiter unterteilt. So werden beispielsweise anstelle massiver Stableiter so genannte Teilleiterbündel (Roebelstab) in die jeweiligen Nuten eingelegt.

Besonders bei elektrischen Maschinen großer Leistung (mehrere 100 MW) wird vorzugsweise eine spezifische und genau festgelegte Verdrillung angewendet, um die Auswirkungen einer Widerstandserhöhung bei Wechselstromspeisung zu reduzieren. Auf diese Weise lassen sich die elektrischen Verluste deutlich reduzieren.

Als weitere wichtige Anforderung bei der Konzipierung von elektrischen Leitern wurde oben die mechanische Stabilität genannt. Diese mechanische Stabilität ist nicht nur in den jeweiligen Nuten von Bedeutung, sondern speziell auch im Wickelkopfbereich. Im Betrieb der elektrischen Maschinen treten bei instationären Vorgängen oft hohe Stromkräfte auf. Instationäre Vorgänge sind beispielsweise der Maschinenanlauf, plötzliche Lastschwankungen, Netzsynchronisierung oder Kurzschlüsse. Damit durch die dabei auftretenden Stromkräfte die Wicklung nicht mechanisch zerstört wird, sind besonders die Wickelköpfe zu versteifen. Die einzelnen Spulen in den Wickelköpfen werden hierzu vielfach mit Keilen, Fließmaterial, Stricken und Bändern zueinander fixiert und stabilisiert.

Aus der Druckschrift DE 10 2014 201 305 A1 ist ein Verfahren zum Herstellen eines Statorteils mit einer Hohlleiterspule bekannt. Eine oder mehrere Windungen der Hohlleiterspule besitzen jeweils wenigstens zwei beabstandet angeordnete Kühlkanäle. Zur Herstellung der Hohlleiterspule werden generative Verfahren verwendet. Hierunter fallen beispielsweise Lasersintern, allgemeine Sinterverfahren oder generell 3D-Druckverfahren. Die Kühlkanäle können hinsichtlich ihrer Form und ihrer Anordnung in den Windungen so hergestellt werden, dass elektrische Wirbelströme in den Windungen vermieden werden. Dabei können die Kühlkanäle in einer Windung der Hohlleiterspule wie bei einem Zopf verflochten werden.

In der Druckschrift EP 2 983 274 B1 ist ein additives Herstellungsverfahren beschrieben, mit dem Litzenanordnungen eines gewünschten Querschnitts und einer bestimmten Isolierung, zum Beispiel Keramik, Glas oder Polymer, zwischen den Litzenleitern gefertigt werden. Hohlbereiche können innerhalb der Anordnung von radial gestapelten Litzenleitern vorgesehen sein. Die Hohlbereiche können dazu dienen, flüssigkeitsbasierte Kühlmittel zu führen.

Auch die Druckschrift US 7 386 842 B1 beschreibt wassergekühlte Wicklungen. Die Litzen sind in Hohlstrukturen angeordnet, durch die Kühlwasser fließt. Einige Litzen haben einen kleineren Wasserdurchgangsbereich als andere.

Die Aufgabe der vorliegenden Erfindung besteht darin, einen elektrischen Leiter zur Verfügung zu stellen, mit dem die Vielzahl an obigen Anforderungen für bestimmte Anwendungen leichter erreicht werden können.

Erfindungsgemäß wird diese Aufgabe gelöst durch einen elektrischen Leiter für eine elektrische Maschine sowie ein Verfahren zur Herstellung einer elektrischen Maschine gemäß den unabhängigen Ansprüchen. Vorteilhafte Weiterbildungen der Erfindung ergeben sich aus den Unteransprüchen.

Es wird demnach ein elektrischer Leiter für eine elektrische Maschine mit einem Leitungskörper, der aus einem elektrisch leitenden Material gefertigt ist, bereitgestellt. Der elektrische Leiter dient in der Regel zur Erzeugung eines Magnetfelds in der elektrischen Maschine. Dies kann insbesondere zur Wandlung von elektrischer Energie in mechanische Energie oder umgekehrt, oder aber auch nur zur Wandlung elektrischer Energie dienen. Dementsprechend handelt es sich beispielsweise bei der elektrischen Maschine um einen Motor, um einen Generator oder um einen Transformator. Bei dem Leitungskörper handelt es sich um dasjenige Gebilde, mit dem die elektrische Leitung des Stroms realisiert wird. Beispielsweise handelt es sich bei dem Leitungskörper einer Spule beziehungsweise Windung um das eigentliche Kupfer in der jeweiligen geometrischen Form. Der Leitungskörper stellt also die tatsächliche dreidimensionale Leitungsstruktur des jeweiligen elektrischen Leiters dar.

Außerdem umfasst der elektrische Leiter eine Kühlmittelleiteinheit, die in den Leitungskörper zumindest teilweise integriert ist. Bei der Kühlmittelleiteinheit kann es sich um eine Hohlstruktur handeln, die sich in dem Leitungskörper befindet. In diese Hohlstruktur lässt sich das Kühlmittel leiten. Gegebenenfalls kann es sich bei dem Kühlmittel um gasförmiges oder flüssiges Kühlmittel handeln.

Erfindungsgemäß ist der Leitungskörper gitterförmig ausgebildet. Dies bedeutet, dass der Körper, der für die elektrische Leitung zuständig ist, nicht vollständig massiv ausgebildet ist, sondern zumindest teilweise eine Gitterstruktur besitzt. In dem oder durch den Leitungskörper ist also eine Gitterstruktur aus dem leitenden Material (zum Beispiel Kupfer, Aluminium oder dergleichen) realisiert. Gitterförmig bedeutet hier, dass es sich um eine dreidimensionale Gitterstruktur handelt. Ähnlich einem Kristallgitter handelt es sich also um ein dreidimensionales Netz, wobei jedoch die einzelnen Punkte durch tatsächliche Leiterelemente aus dem Leitermaterial verbunden sind. Es kann sich beispielsweise um ein regelmäßiges Gitter handeln, bei dem jede Elementarzelle einem Würfel, Tetraeder oder dergleichen entspricht. Dementsprechend sind die Kanten der Elementarzellen, hier die Leiterabschnitte, entweder orthogonal oder in einem entsprechenden Winkel zueinander angeordnet. Die Gitterstruktur kann jedoch auch unregelmäßig sein, wobei die einzelnen Gitterpunkte mehr oder weniger zufällig im Raum angeordnet sind.

Die Kühlmittelleiteinheit ist zum Teil durch Hohlräume des gitterförmigen Leitungskörpers gebildet. Dies bedeutet, dass das Gitter des Leitungskörpers einen oder mehrere Hohlräume begrenzt, die zu der Kühlmittelleiteinheit gehören. Insbesondere kann es sich um einen oder mehrere zusammenhängende Hohlräume innerhalb des Gitters des Leitungskörpers handeln. Durch diese Gitterstruktur kann es sich beispielsweise um eine porösen Leitungskörper handeln, in dem das Kühlmittel vorzugsweise in alle Richtungen strömen kann. Gegebenenfalls wird innerhalb der Gitterstruktur aber auch eine gewisse Kanalisierung vorgenommen.

Die Kühlmittelleiteinheit besitzt eine dichte Wandung, die bereichsweise einen Kühlmittelaustritt aus dem Leitungskörper verhindert. Diese dichte Wandung umgibt beispielsweise den gitterförmigen beziehungsweise porösen Leitungskörper, sodass das Kühlmittel nicht nach außen austreten kann. Natürlich ist die Wandung nicht komplett geschlossen, denn es soll eine Kühlmitteldurchströmung des Leitungskörpers erfolgen. Daher sind an dem Leitungskörper beispielsweise Kühlmittelöffnungen vorgesehen, durch die das Kühlmittel ein- und austreten kann. Dementsprechend schließt die Wandung den Leitungskörper nur bereichsweise dichtend ab. Bei einem zylindrischen Leitungskörper kann die dichte Wandung zylindermantelförmig den Leitungskörper umgeben, wobei zum Beispiel die Stirnseiten zur Kühlmitteleinführung und -ausführung offen sind, d.h. die Gitterstruktur ist offen zugänglich.

In vorteilhafter Weise werden durch die Gitterstruktur des Leitungskörpers die Wirbelstromverluste deutlich reduziert. Trotz der Gitterstruktur kann auch eine hohe elektrische Leitfähigkeit durch beispielsweise Kupfer- oder Aluminiummaterial gegeben sein. Das Gitter sorgt darüber hinaus für hohe mechanische Stabilität. Ein besonderer Vorteil der Gitterstruktur des Leitungskörpers besteht jedoch darin, dass das Gitter unmittelbar von Kühlmittel umströmt beziehungsweise durchströmt sein kann, sodass die Wärmeleitungswege vom Leiter zum Kühlmittel verhältnismäßig gering sind. Auf diese Weise kann ein vielfacher Vorteil gegenüber massiven Leitern oder Leitern mit wenigen Kühlkanälen erzielt werden.

In besonders bevorzugter Ausführungsform ist der Leitungskörper zur elektrischen Leitung einschließlich der Kühlmittelleiteinheit einteilig durch ein additives oder subtraktives Verfahren hergestellt. Dies bedeutet, dass die Gitterform beziehungsweise Gitterstruktur des Leitungskörpers und gegebenenfalls weitere Komponenten des elektrischen Leiters mittels des additiven oder subtraktiven Herstellungsverfahrens gefertigt sind. Durch die Herstellung des elektrischen Leiters mittels eines additiven beziehungsweise generativen Verfahrens ergibt sich der Vorteil, dass im Wesentlichen keine Einschränkungen bezüglich der Geometrie oder der Gestaltung des Produkts bestehen. Als generative Verfahren sind beispielsweise Lasersintern, allgemeine Sinterverfahren oder generelle 3D-Druckverfahren zu nennen. Besonders vorteilhaft ist, dass durch die Herstellung des elektrischen Leiters mittels eines generativen Verfahrens zum Beispiel einzelne Windungen einer Spule optimal an einen verfügbaren Wickelraum einer elektrischen Maschine angepasst werden können. Beispielsweise können die einzelnen Windungen der Spule individuell dimensioniert werden. Unter einer Anpassung der Spule ist beispielsweise auch eine Erhöhung des Füllfaktors zu verstehen. Hierbei ist der Füllfaktor definiert als das Verhältnis von Querschnittsfläche der Windungen (Leiterquerschnittsfläche) der Spule zum Querschnitt des Wickelraums. Durch den erhöhten Füllfaktor der im generativen Verfahren hergestellten Spule wird der Wicklungswiderstand der Spule verringert. Vorteilhafter Weise ergibt sich dadurch ein erhöhter Wirkungsgrad der elektrischen Maschine.

Durch die Gestaltungsmöglichkeiten, die ein generatives Verfahren ermöglicht, können die einzelnen Windungen einer Wicklung variabel in ihrer Form und bezüglich ihres Zwecks optimiert hergestellt werden. Beispielsweise können die einzelnen Windungen in wenigstens einem Wickelkopf der Spule einen im Vergleich zu bekannten Wicklungen oder Windungen geringeren Biegeradius aufweisen. Durch den verringerten Biegeradius der Wicklungen oder Windungen im Wickelkopf ergibt sich vorteilhafter Weise eine Bauraumersparnis, sodass der Wirkungsgrad der elektrischen Maschine verbessert wird.

Bei einer weiteren Ausführungsform ist vorgesehen, dass der Leitungskörper eine Längsachse aufweist, und die dichte Wandung der Kühlmittelleiteinheit zylindermantelförmig ausgebildet ist und koaxial mit der Längsachse des Leitungskörpers verläuft. Der Leitungskörper ist also typischerweise länglich ausgeführt und besitzt eine Zylinderform. Dabei kann es sich um eine Kreiszylinderform, eine Ovalzylinderform, eine Prismenform oder dergleichen handeln. In jedem Fall umgibt die dichte Wandung der Kühlmittelleiteinheit den Leitungskörper so, dass am Mantel kein Kühlmittel austreten kann. Dementsprechend besitzt die dichte Wandung eine Zylindermantelform. Alternativ muss die dichte Wandung den Leitungskörper nicht ganz außen umgeben. Vielmehr kann die Wandung auch ganz oder teilweise im Inneren des Leitungskörpers vorgesehen sein. In diesem Fall durchströmt das Kühlmittel nicht alle Teile des Leitungskörpers gleichermaßen.

In einer weiteren Ausgestaltung ist die dichte Wandung aus dem gleichen Material wie der Leitungskörper oder einem elektrischen Isolationsmaterial, insbesondere einer Keramik, hergestellt. Je nach elektrischen Anforderungen kann die dichte Wandung zur Abdichtung des Kühlmittelstroms aus dem gleichen elektrisch leitenden Material wie der Leitungskörper oder aus einem elektrisch isolierenden Material insbesondere additiv gefertigt sein. Gegebenenfalls kann die dichte Wandung durch eine zusätzliche Isolationsschicht umgeben sein. Bei dem Isolationsmaterial kann es sich gegebenenfalls auch um ein Polymer handeln.

Gemäß einer weiteren Ausführungsform ist der Leiter als Leiterstab ausgebildet. Ein solcher Leiterstab kann beispielsweise für eine Käfigwicklung genutzt werden. Insbesondere werden derartige Leiterstäbe bei großen elektrischen Maschinen eingesetzt, wodurch sich die Montage vereinfachen lässt.

In einer weiteren Ausgestaltung ist vorgesehen, dass die Kühlmittelleiteinheit einen Kühlmittelanschluss aufweist, durch den ein Kühlmittel in das Innere der Kühlmittelleiteinheit einleitbar ist, und der dicht mit der Wandung ausgebildet ist. Bei dem Kühlmittelanschluss handelt es sich um ein spezifisch für den Kühlmittelein- beziehungsweise -auslass vorgesehenes Element wie beispielsweise einen Flansch oder Rohrstutzen. Der Kühlmittelanschluss stellt damit eine Schnittstelle zwischen beispielsweise eine Kühlmitteleitung und dem zu kühlenden elektrischen Leiter beziehungsweise Leitungskörper dar. Hierbei ist der Kühlmittelanschluss so auszugestalten, dass er dicht mit der Wandung der Kühlmittelleiteinheit abschließt. Wenn der Kühlmittelanschluss beispielsweise an der Stirnseite eines stabförmigen Leiters vorgesehen ist, sollte er die komplette Stirnseite dicht abschließen und insbesondere mit der zylindermantelförmigen Wandung der Kühlmittelleiteinheit dicht verbunden sein. In einer vorteilhaften Ausgestaltung besitzt der elektrische Leiter beziehungsweise die Kühlmittelleiteinheit mindestens zwei Kühlmittelanschlüsse, durch die das Kühlmittel ein- und ausgeleitet wird. Beispielsweise sind ein derartiger Kühlmittelanschluss an der einen Stirnseite eines Leiterstabs und ein anderer Kühlmittelanschluss an der anderen Stirnseite des Leiterstabs angeordnet. Durch einen oder mehrere derartige Kühlmittelanschlüsse ist ein definierter Ein- beziehungsweise Auslauf von Kühlmittel in beziehungsweise aus dem elektrischen Leiter gewährleistet. Dabei kann der jeweilige Kühlmittelanschluss Adapterfunktionalität übernehmen.

Entsprechend der vorliegenden Erfindung kann damit eine elektrische Maschine mit einem Eisenkern, der Nuten aufweist, in die einer oder mehrere elektrische Leiter nach einer der vorhergehenden Ausführungsvarianten eingefügt sind, bereitgestellt werden. Bei dieser elektrischen Maschine kann es sich wie bereits erwähnt, um einen Motor, einen Generator oder einen Transformator handeln. Der Eisenkern ist beispielsweise der Kern eines Stators oder Rotors (Anker). In die Nuten dieses Eisenkerns können nun die vollständig oder teilweise gitterförmig gebildeten Leitungskörper eingelegt werden. Gegebenenfalls sind sie mit entsprechenden Isolationen in die Nuten eingelegt. Mit einem derartigen gitterförmigen Leitungskörper, der zahlreiche Hohlräume für ein Kühlmittel besitzt, kann eine elektrische Maschine mit einem sehr hohen Wirkungsgrad hergestellt werden. Darüber hinaus sind auch die Wirbelstromverluste aufgrund der vielfach unterbrochenen Oberfläche sehr gering.

Bei der elektrischen Maschine können gemäß einer Weiterbildung der eine oder die mehreren elektrischen Leiter Teil einer Wicklung sein. Beispielsweise kann der elektrische Leiter mit dem gitterförmigen Leitungskörper Teil einer Wicklung sein, bei der ein anderer Teil einen massiven Leitungskörper oder einen mit Kühlleitungen durchzogenen Leitungskörper darstellt. Alternativ kann die gesamte Wicklung auch vollständig aus dem elektrischen Leiter mit dem gitterförmigen Leitungskörper gebildet sein. Dies bedeutet, dass insbesondere auch die Wickelköpfe eines Motors oder Generators mit dem gitterförmigen Leitungskörper gebildet sein können. Alternativ kann aber auch beispielsweise ein Kurzschlusskäfig oder dergleichen aus dem elektrischen Leiter mit dem gitterförmigen Leitungskörper gebildet sein. Demnach können nahezu sämtliche Arten von elektrischen Maschinen von den gitterförmigen Leitungskörpern mit integrierter Kühlung profitieren.

Die oben genannte Aufgabe wird erfindungsgemäß auch gelöst durch ein Verfahren zur Herstellung einer elektrischen Maschine durch Bereitstellen eines Eisenkerns mit Nuten, Herstellen eines elektrischen Leiters mit einem Leitungskörper, der aus einem elektrisch leitenden Material gefertigt wird, und einer Kühlmittelleiteinheit, die zumindest teilweise in den Leitungskörper integriert ist, und
Einbringen des elektrischen Leiters in eine oder mehrere der Nuten, wobei der Leitungskörper durch ein additives oder subtraktives Herstellungsverfahren gitterförmig ausgebildet wird, die Kühlmittelleiteinheit zum Teil durch Hohlräume des gitterförmigen Leitungskörpers gebildet wird, und eine dichte Wandung der Kühlmittelleiteinheit in dem oder um den Leitungskörper, die bereichsweise einen Kühlmittelaustritt aus dem Leitungskörper verhindert, angebracht wird.

Es wird also für die Herstellung der elektrischen Maschine ein Eisenkern mit Nuten bereitgestellt. In diesen üblicherweise geblechten Eisenkern wird der oben genannte gitterförmige Leitungskörper eingelegt. Dabei kann der elektrische Leiter beziehungsweise Leitungskörper (gegebenenfalls auch mehrere davon) in alle Nuten oder nur einen Teil dieser Nuten eingelegt werden. Der gitterförmige Leitungskörper wird durch ein additives oder subtraktives Herstellungsverfahren ausgebildet beziehungsweise hergestellt. Insbesondere wird er also additiv, beispielsweise durch einen 3D-Druck oder subtraktiv durch Ätzen oder Laserabtragung gefertigt. Die dichte Wandung der Kühlmittelleiteinheit kann, wie oben bereits erwähnt wurde, ebenfalls durch das additive oder subtraktive Verfahren zusammen mit dem Leitungskörper gefertigt werden. Insgesamt gelten die oben in Zusammenhang mit dem elektrischen Leiter beziehungsweise der elektrischen Maschine genannten Vorteile und Variationsmöglichkeiten sinngemäß auch für das erfindungsgemäße Herstellungsverfahren.

Bei einer Weiterbildung des erfindungsgemäßen Herstellungsverfahrens wird eine Gitterstruktur dadurch ermittelt, dass sie hinsichtlich eines Strömungsparameters optimiert wird.

Die Gitterstruktur des Leitungskörpers kann unterschiedlichste Gestalt besitzen. Sie ist nicht auf würfelförmige Elementarzellen beschränkt. Vielmehr können die die einzelnen Gitterpunkte verbindenden Gitterstäbe beziehungsweise Kanten auch andere als 90 Grad Winkel beinhalten. Speziell müssen aber auch nicht alle Elementarzellen im gesamten Leitungskörper gleichförmig ausgebildet sein. Beispielsweise können die Elementarzellen im Zentrum des Leitungskörpers anders strukturiert sein als diejenigen am Rand des Leitungskörpers.

Bei einer bevorzugten Ausgestaltung des erfindungsgemäßen Herstellungsverfahrens wird für das Herstellen des elektrischen Leiters eine Gitterstruktur dadurch ermittelt, dass sie hinsichtlich eines Strömungsparameters optimiert wird. Dies bedeutet, dass vor dem tatsächlichen Herstellen für den Leitungskörper eine Gitterstruktur gefunden wird, die hinsichtlich eines Strömungsparameters beziehungsweise einer Strömungsanforderung optimiert ist. So kann beispielsweise das Gitter danach optimiert werden, dass bei einem gegebenen Kühlmitteldurchfluss an bestimmten Orten in dem Leitungskörper vorgegebene Strömungsgeschwindigkeiten erreicht werden. Alternativ könnte die Gitterstruktur bei vorgegebenem elektrischem Widerstand einen gewünschten, d.h. ebenfalls vorgegebenen, Kühlmitteldurchsatz erzielen. Das Optimieren kann darin liegen, dass bei gegebenen Randbedingungen ein bestimmter Wert eines Strömungsparameters erreicht wird. Es wird also in der Regel ein Kompromiss zwischen den Strömungsparametern und anderen Maschinen- beziehungsweise Herstellungsparametern gefunden. Bei dieser Kompromissfindung kann der ein oder andere Parameter in den Vordergrund treten, beispielsweise durch entsprechende Gewichtung.

Alternativ kann für das Herstellen des elektrischen Leiters auch eine Gitterstruktur dadurch ermittelt werden, dass sie hinsichtlich eines Festigkeitsparameters optimiert wird. Für die Gitterstruktur kann also beispielsweise eine Mindestfestigkeit vorgegeben werden. Die übrigen Herstellungs- beziehungsweise Maschinenparameter für das Gitter werden dann so eingestellt, dass diese Mindestfestigkeit erreicht wird. Beispielsweise wird die Festigkeit von länglichen Leitern durch bionische Ansätze verwirklicht. So kann beispielsweise die Steifigkeit eines Leiters dadurch optimiert werden, dass sie der Struktur eines Grashalms angeglichen wird, der ebenfalls von einer Flüssigkeit durchströmt wird. Speziell könnten derartige Festigkeitsvorgaben auch im Wickelkopfbereich von großem Nutzen sein. Hierdurch könnte auf bestimmte Verfestigungs- beziehungsweise Abstützmaßnahmen im Wickelkopfbereich verzichtet werden.

Die vorliegende Erfindung wird nun anhand der beigefügten Zeichnungen näher erläutert, in denen zeigen:
- FIG 1: einen elektrischen Leiter mit mehreren gitterförmig strukturierten Leitungskörpern;
- FIG 2: einen gitterförmig strukturierten Leitungskörper für eine ovale Nut;
- FIG 3: ein Strömungsbild für mehrere aneinander gefügte Leitungskörper;
- FIG 4: einen elektrischen Leiter in einer elektrischen Maschine; und
- FIG 5: einen schematischen Verfahrensablauf zum Herstellen einer elektrischen Maschine mit gitterförmig strukturierten Leitern.

Die nachfolgend näher geschilderten Ausführungsbeispiele stellen bevorzugte Ausführungsformen der vorliegenden Erfindung dar.

Es soll ein elektrischer Leiter für eine elektrische Maschine wie etwa einem Elektromotor, einem Generator oder einem Transformator zur Verfügung gestellt werden.

Dieser elektrische Leiter wird zur Erzeugung eines Magnetfelds benutzt. Zur Erhöhung des Wirkungsgrads ist eine Kühlmittelleiteinheit zur Kühlung des eigentlichen Leitungskörpers des elektrischen Leiters in diesen integriert. Die Erfindung basiert nun auf dem Gedanken, den eigentlichen Leitungskörper gitterförmig zu strukturieren, um einerseits Wirbelstromverluste zu reduzieren und andererseits die Verlustwärme möglichst effizient abzuführen. Dazu werden die Hohlräume in dem gitterförmig strukturierten Leitungskörper zur Kühlmittelleitung verwendet.

Vorzugsweise werden derartige elektrische Leiter mit gitterförmig strukturierten Leitungskörpern und Kühlmittelleiteinheit durch ein additives oder subtraktives Herstellungsverfahren hergestellt. Besonders vorteilhaft lässt sich ein additives Verfahren, wie etwa ein 3D-Druck, dazu einsetzen, den elektrischen Leiter mit seinen gesamten Funktionalitäten einteilig zu fertigen. Gegebenenfalls können durch das additive Verfahren weitere Funktionseinheiten wie etwa eine dichte Wandung der Kühlmittelleiteinheit sowie etwaige Anschlüsse und dergleichen in einem Verfahrensschritt mit hergestellt werden.

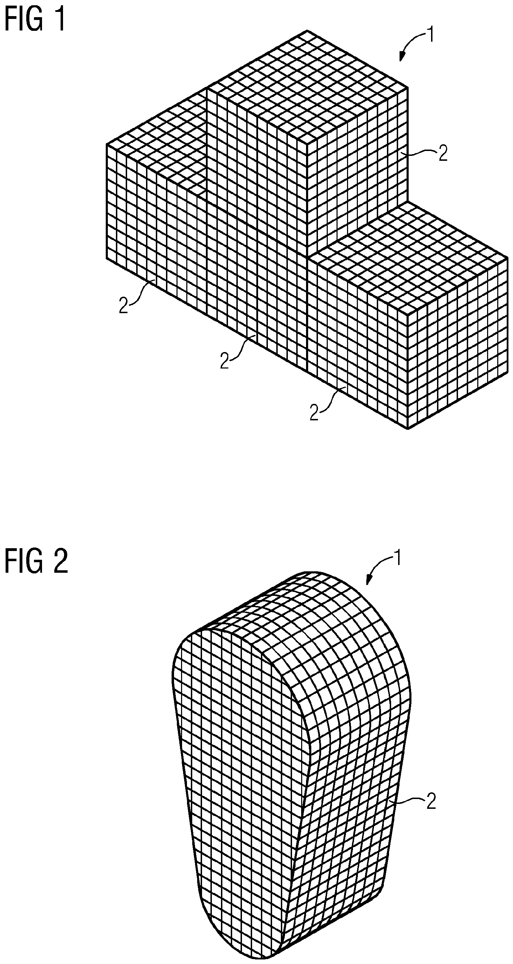

FIG 1 zeigt ein Beispiel eines elektrischen Leiters 1 mit mehreren Leitungskörpern 2. Die einzelnen Leitungskörper besitzen hier im gewählten Beispiel eine Quaderform. Die Form der einzelnen Leitungskörper muss nicht gleich sein. Im vorliegenden Beispiel ist über drei nebeneinander angeordneten Leitungskörpern 2 ein weiterer Leitungskörper 2 angeordnet. Die einzelnen Leitungskörper können relativ zueinander isoliert sein, sie müssen es aber nicht.

Jeder Leitungskörper 2 besitzt eine dreidimensionale gitterförmige Struktur. Dies bedeutet, dass zwischen einzelnen Gitterfilamente Hohlräume angeordnet sind. Die Gitterfilamente sind aus einem elektrisch leitenden Material wie etwa Kupfer oder Aluminium gefertigt und sind insbesondere in der Leitungsrichtung des elektrischen Stroms kontinuierlich ausgebildet. Im Endeffekt ergeben sich somit in Stromrichtung viele parallele Leiterfilamente, die in regelmäßigen oder unregelmäßigen Abständen kurzgeschlossen sind. Dies bedeutet, dass das Leitungsgitter in allen Raumrichtungen regelmäßig oder unregelmäßig ausgebildet sein kann.

Die Zwischenräume zwischen den einzelnen Leiterfilamenten stellen Hohlräume zum Leiten eines Kühlmittels wie etwa Luft oder Wasser dar. Die Hohlräume sind in einer gewünschten Strömungsrichtung miteinander verbunden, sodass das Kühlmittel in dieser gewünschten Strömungsrichtung durch den Leitungskörper 2 in entsprechender Weise strömen kann.

FIG 2 zeigt ein Beispiel eines elektrischen Leiters 1 beziehungsweise Leitungskörpers 2 mit ovalem Querschnitt. Dieses Beispiel zeigt, dass der gitterförmig strukturierte Leitungskörper 2 ohne weiteres an einen Nutquerschnitt einer elektrischen Maschine angepasst sein kann. Insbesondere bei additiven beziehungsweise generativen Herstellungsverfahren ist die Anpassung des Querschnitts an beliebige Nutformen unproblematisch. Auch dieser Leitungskörper mit spezieller Außenkontur besitzt im Inneren eine dreidimensionale Gitterstruktur beziehungsweise Gitterform, die sowohl die Stromleitung als auch die Kühlmittelleitung gewährleistet.

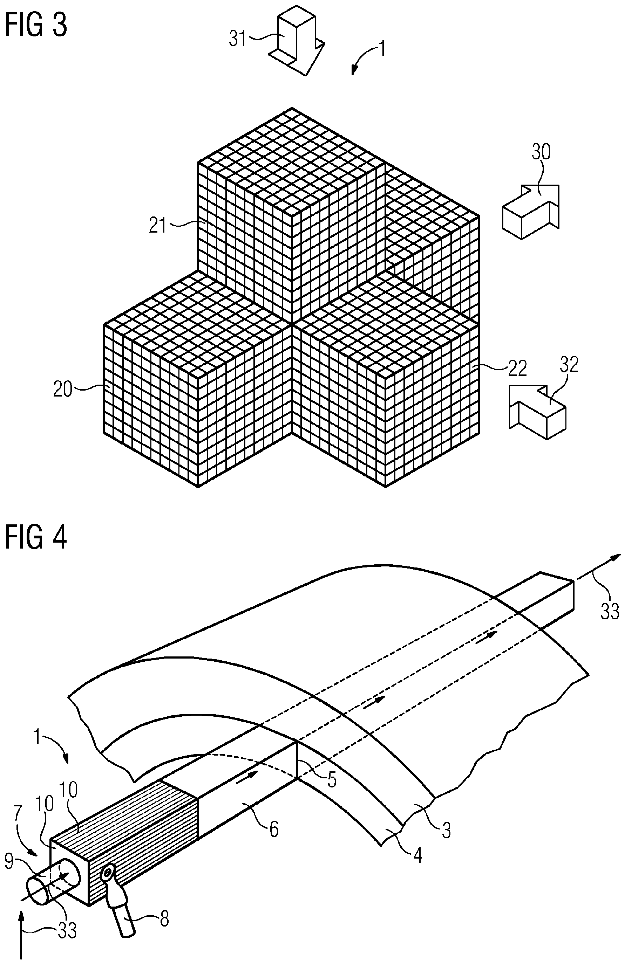

FIG 3 zeigt drei gitterförmig strukturierte Leitungskörper 20, 21 und 22. Sie sind aneinander gefügt und bilden einen elektrischen Leiter 1. Dies bedeutet, dass beispielsweise Strom von dem einen Leitungskörper 20 in den oder die anderen Leitungskörper 21, 22 oder umgekehrt fließen kann.

Am Beispiel von FIG 3 ist dargelegt, wie die einzelnen Leitungskörper auch räumlich in beliebiger Weise aneinander angeordnet werden können. Die einzelnen hier quaderförmigen Leitungskörper 20, 21 und 22, die auch andere Körperformen annehmen können, können einzeln aneinander gefügt werden oder einteilig miteinander gefertigt werden. Im vorliegenden Beispiel ist an einer Seite des quaderförmigen Leitungskörpers 20 der weitere quaderförmige Leitungskörper 22 mit seiner Stirnseite angefügt. An der benachbarten Seite des quaderförmigen Leitungskörpers 20 ist der weitere, ebenfalls quaderförmige Leitungskörper 21 angebracht. Damit ergibt stellvertretend für viele dreidimensionale Formen sich ein dreidimensionaler Körper mit Anformungen in allen drei Raumrichtungen.

Dieser elektrische Leiter 1 von FIG 3 wird auch von Kühlmittel durchströmt, was durch Strömungspfeile 30, 31 und 32 in drei verschiedenen Raumrichtungen angedeutet ist. So strömt beispielsweise Kühlmittel entsprechend dem Strömungspfeil 31 in den Leitungskörper 21 ein. Ebenso strömt Kühlmittel gemäß Strömungspfeil 32 in eine freie Stirnseite des Leitungskörpers 22 ein. Das Kühlmittel durchströmt die Leitungskörper 21 und 22 und fließt in den Leitungskörper 20. In diesem wird es hier jeweils senkrecht umgelenkt und verlässt ihn stirnseitig gemäß Strömungspfeil 30. Mit diesem Beispiel soll angedeutet werden, dass unterschiedlichste Strömungsrichtungen beziehungsweise Strömungen in dem elektrischen Leiter ermöglicht werden können.

Das räumliche Gitter des beziehungsweise der Leitungskörper kann nach verschiedenen Optimierungsbedingungen ermittelt beziehungsweise vorgegeben werden. Beispielsweise kann der Querschnitt des jeweiligen Leitungskörpers entsprechend dem zugehörigen Nutquerschnitt (zum Beispiel 10 x 20 mm) vorgegeben werden. Beispielsweise kann eine Optimierung nach gewissen Strömungsparametern, wie Durchflussmenge, Durchflussgeschwindigkeit, Strömungsprofil und dergleichen erfolgen. Insbesondere kann auch nach geringstmöglichen Druckverlusten und/oder möglichst effizienter Wärmeabfuhr optimiert werden. Dabei kann als Randbedingung eine bestimmte mechanische Festigkeit des elektrischen Leiters vorgegeben werden.

In einem anderen Beispiel kann spezifisch für einen Wickelkopfbereich ein Leitungsquerschnitt fest vorgegeben werden. Hier im Wickelkopfbereich kann die Optimierung primär nach der maximalen mechanischen Festigkeit erfolgen. Eine untergeordnete Rolle können hier die Strömungskanäle spielen. Aufgrund der Gitterstruktur der Leitungskörper, die den Stromfluss bewirken, treten in jedem Fall keine ausgedehnten Leiterflächen auf und somit auch kaum Wirbelströme.

Fig. 4 zeigt wie ein derartiger elektrischer Leiter mit gitterförmig strukturiertem Leitungskörper in einer elektrischen Maschine genutzt beziehungsweise in diese eingebaut werden kann. So ist beispielsweise innerhalb eines Maschinengehäuses 3 ein hohlzylindrischer Eisenkern 4 (zum Beispiel Teil eines Stators) angeordnet. Dieser Eisenkern 4 besitzt hier eine Nut 5. Weitere Nuten sind hier der Übersicht halber nicht eingezeichnet. In die Nut 5 ist ein elektrischer Leiter 1 mit gitterförmig strukturiertem Leitungskörper eingelegt. Zur elektrischen Isolation kann der elektrische Leiter 1 eine Isolationshülse 6 aufweisen.

An einem Ende kann der elektrische Leiter 1 einen Einspeiseabschnitt 7 aufweisen. Dieser Einspeiseabschnitt 7 besitzt beispielsweise einen Stromanschluss 8 und eine Kühlmittelanschluss 9. Damit das Kühlmittel in dem elektrischen Leiter geführt werden kann, ist es notwendig, dass der elektrische Leiter eine Kühlmittelleiteinheit aufweist. In dem vorliegenden Beispiel gehören neben den Hohlräumen in dem gitterförmig strukturierten Leitungskörper, durch die das Kühlmittel strömt, auch eine dichtende Wandung, die eine Abdichtung nach außen darstellt, damit das Kühlmittel den elektrischen Leiter nicht ungehindert an beliebigen Stellen verlassen kann. Im vorliegenden Beispiel von FIG 4 ist diese dichtende Wandung als Leiterhülse 10 realisiert. Sie umgibt den elektrischen Leiter beziehungsweise Leitungskörper nahezu vollständig. Auch an der Stirnseite des elektrischen Leiters 1, an der hier der Kühlmittelanschluss 9 vorgesehen ist, dichtet die Leiterhülse 10 den elektrischen Leiter bis zum Kühlmittelanschluss 9 ab. Das Kühlmittel kann hier entsprechend den Strömungspfeilen 33 nur durch den Kühlmittelanschluss 9 in den Einspeiseabschnitt 7 eingespeist und in Längsrichtung durch den stabförmigen elektrischen Leiter 1 hindurchgeleitet werden. An dem dem Einspeiseabschnitt 7 gegenüberliegenden Ende des elektrischen Leiters 1 wird das Kühlmittel gegebenenfalls durch einen weiteren Kühlmittelanschluss aus dem elektrischen Leiter 1 ausgeleitet. Weitere Kühlmittelein- und Auslässe neben denjenigen an den Stirnseiten des Leiters 1 sind hier nicht vorgesehen. Sowohl der Strom als auch das Kühlmittel werden hier in Längsrichtung (oder entgegengesetzt) durch den elektrischen Leiter 1 geführt.

Abschottungen, wie die elektrische Leiterhülse 10 können mittels additiver Herstellungsverfahren direkt in den Leiter eingearbeitet werden. Gegebenenfalls kann auch ein Wickelkopf ohne direkte Kühlung vorgesehen und mittels dieser Fertigungstechnik angeschlossen werden. Die äußere Hülle (oben Isolationshülle 6 genannt) kann alternativ auch von einer dünnen elektrisch leitenden Schicht gebildet werden. Im Falle einer nichtleitenden Schicht kann es sich um Isolationsmaterial wie etwa Keramik handeln. Diese Hüll- beziehungsweise Isolationsschicht 6, sofern erforderlich, lässt sich auch nachträglich mittels konventioneller Technik (Beschichtung, Umwicklung) aufbringen.

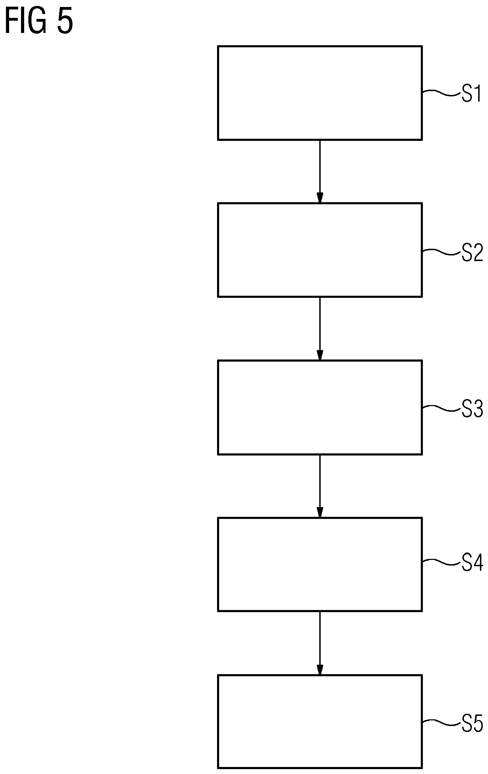

In FIG 5 ist schematisch ein Herstellungsverfahren einer elektrischen Maschine mit dem gitterförmig strukturierten Leitungskörper dargestellt. In einem Schritt S1 erfolgt das Bereitstellen eines Eisenkerns mit Nuten. In einem anschließenden Schritt S2 wird eine Gitterstruktur ermittelt. Dabei kann beispielsweise die Gitterstruktur hinsichtlich eines Strömungsparameters optimiert werden. Alternativ kann die Gitterstruktur auch im Hinblick auf Festigkeitsparameter des elektrischen Leiters optimiert werden. Gegebenenfalls können für die Gitterstruktur auch dichtende Wandungen für das Kühlmittel berücksichtigt werden. Dazu wird diese dichtende Wandung in einem Schritt S3 festgelegt. Dadurch werden die wesentlichen Strömungsrichtungen vorgegeben.

In einem nun anschließenden Schritt S4 erfolgt das Fertigen des elektrischen Leiters, bei dem die Kühlmittelleiteinheit in den Leitungskörper integriert ist, vorzugsweise durch ein additives oder subtraktives Verfahren. Schließlich erfolgt in einem letzten Schritt S5 das Einbringen des hergestellten elektrischen Leiters in die Nut des Eisenkerns der elektrischen Maschine. Gegebenenfalls werden weitere solche elektrischen Leiter in anderen Nuten des Eisenkerns eingebracht.

Durch die beliebige Geometriegestaltung des gitterförmig strukturierten Leitungskörpers insbesondere durch additive Herstellungsverfahren lassen sich die Anforderungen an die mechanische Festigkeit und günstigen Strömungsverhältnisse gleichzeitig optimieren. Hier kann auch auf bionische Ansatzpunkte zurückgegriffen werden.

Bei gegebenen Leiterquerschnitt kann das Gitter an jeder Stabstelle, d.h. abhängig davon, ob sich die Leiterstelle im Nut- oder Wickelkopfbereich befindet, den mechanischen und strömungstechnischen Anforderungen angepasst werden. Bei Einsatz der herkömmlichen Leitermaterialien, Aluminium und Kupfer, ist zudem eine gute Wärmeleitung gegeben.

Durch die Gitterstruktur gibt es keine ausgedehnten, zusammenhängenden Oberflächen. Damit treten auch bei hohen Frequenzen keine Wirbelströme auf. Die zusätzliche Widerstandserhöhung durch etwaige Wirbelströme und die damit einhergehenden Verluste entfallen, sodass der Wirkungsgrad steigt. Gegebenenfalls können auch Teilleiterisolationen entfallen, wodurch sich der Nutquerschnitt besser ausnutzen lässt. Durch die effiziente Kühlung kann außerdem die thermische Widerstandserhöhung in Grenzen gehalten werden. All dies trägt zu einer Steigerung des Wirkungsgrads bei.

Eine Aufteilung des Leiters in parallele Teilleiter ist durch die Gitterstruktur des Leiters hinfällig. Damit entfällt auch die Isolation der einzelnen Teilleiter und in dem zur Verfügung stehenden Nutquerschnitt kann, wie oben bereits angedeutet wurde, mehr Leiterquerschnitt eingebracht werden. Der ohmsche Widerstand sinkt und die Kupferverluste werden geringer, sodass der Wirkungsgrad steigt.

Mit Hilfe der Gitterstruktur wird die Leiteroberfläche (bei unverändertem Gesamtquerschnitt) enorm vergrößert, womit sich ein hohes Kühlvermögen ergibt. Zum Beispiel ist für das Kühlmittel "Luft" das Leiterinnere leicht zugänglich, wodurch eine direkte Luftkühlung einfach zu realisieren ist. In Folge der verbesserten Kühlung sind bisher nicht erreichbare Leistungsdichten erzielbar. Besonders für die Kühlmittelzuführung ergeben sich durch die Gitterstruktur, d.h. keine geschlossene Oberfläche, vielfältige, einfache Ausführungsmöglichkeiten.

Weiterhin ist ein schichtweises Zusammensetzten des Leiters aus mehreren einzelnen gitterförmigen Leitungskörpern möglich. Damit ist eine einfache Anpassung an nicht parallelflankige Nutgeometrien entsprechend dem Baukastenprinzip realisierbar. Insbesondere können so bei größeren Nutabmessungen mehrere Gitterschichten in die jeweilige Nut eingelegt werden.

Im Wickelkopfbereich kann die Gitterstruktur hinsichtlich optimaler mechanischer Festigkeit vorgegeben werden. Damit kann speziellen Randbedingungen, wie etwa den Stromkräften, besser Rechnung getragen werden. Beispielsweise können so die aufwändigen Abstützungen entfallen beziehungsweise reduziert werden.

Besonders bei elektrischen Maschinen mit Stableitern, wie diese beispielsweise bei Turbogeneratoren, Flugmotoren oder großen Industrieantrieben vorkommen, können mit dem erfindungsgemäßen elektrischen Leiter sehr kompakte Antriebe realisiert werden. Durch die vereinfachte, direkte Kühlung der Gitterstableiter mit Gasen oder Flüssigkeiten können Leistungsdichten erreicht werden, welche bisher nur durch den Einsatz von sehr teuren Technologien (zum Beispiel Hochtemperatur-Supraleiter) denkbar sind.

Wie oben mehrfach angedeutet wurde, verhindert der Gitterstableiter die Bildung von Wirbelströmen und die damit verbundenen Verluste unabhängig von der Speisefrequenz zum Beispiel der Statorwicklung. Maschinen mit erhöhtem Wirkungsgrad gegenüber dem Stand der Technik können realisiert werden. Schnell drehende Maschinen können für höhere Speisefrequenzen ausgelegt werden, ohne auf spezielle Wicklungsausführungen, wie Kupferlitze, zurückgreifen zu müssen. Alternativ zum additiven Verfahren lässt sich ein Gitterstableiter mittels filigraner Strangpressprofile und subtraktiver Bearbeitung herstellen, was besonders für große Maschinen- und Blechpaketlängen von Interesse ist.

## Patentansprüche

1. Elektrischer Leiter (1) für eine elektrische Maschine mit
- einem Leitungskörper (2), der aus einem elektrisch leitenden Material gefertigt ist, und
- einer Kühlmittelleiteinheit, die zumindest teilweise in den Leitungskörper (2) integriert ist,
**dadurch gekennzeichnet, dass**
- der Leitungskörper (2) zumindest teilweise gitterförmig ausgebildet ist,
- die Kühlmittelleiteinheit zum Teil durch einen oder mehrere Hohlräume des gitterförmigen Leitungskörpers (2) gebildet ist und
- die Kühlmittelleiteinheit eine dichte Wandung (10) aufweist, die bereichsweise einen Kühlmittelaustritt aus dem Leitungskörper (2) verhindert.

2. Elektrischer Leiter (1) nach Anspruch 1, wobei der Leitungskörper (2) einschließlich der Kühlmittelleiteinheit einteilig durch ein additives oder subtraktives Verfahren hergestellt ist.

3. Elektrischer Leiter (1) nach Anspruch 1 oder 2, wobei der Leitungskörper (2) eine Längsachse aufweist, und die dichte Wandung der Kühlmittelleiteinheit zylindermantelförmig ausgebildet ist und koaxial mit der Längsachse des Leitungskörpers (2) verläuft.

4. Elektrischer Leiter (1) nach einem der vorhergehenden Ansprüche, wobei die dichte Wandung (10) aus dem gleichen Material wie der Leitungskörper (2) oder einem elektrischen Isolationsmaterial, insbesondere einer Keramik, hergestellt ist.

5. Elektrischer Leiter (1) nach einem der vorhergehenden Ansprüche, wobei der Leiter (1) als Leiterstab ausgebildet ist.

6. Elektrischer Leiter (1) nach einem der vorhergehenden Ansprüche, wobei die Kühlmittelleiteinheit einen Kühlmittelanschluss (9) aufweist, durch den ein Kühlmittel in das Innere der Kühlmittelleiteinheit einleitbar ist, und der dicht mit der Wandung (10) ausgebildet ist.

7. Elektrische Maschine mit einem Eisenkern (4), der Nuten (5) aufweist, in die einer oder mehrere elektrische Leiter (1) nach einem der vorhergehenden Ansprüche eingefügt sind.

8. Elektrische Maschine nach Anspruch 7, wobei der eine oder die mehreren elektrischen Leiter (1) Teil einer Wicklung oder eines Kurzschlusskäfigs sind.

9. Verfahren zur Herstellung einer elektrischen Maschine durch
- Bereitstellen eines Eisenkerns (4) mit Nuten,
- Herstellen eines elektrischen Leiters (1) mit einem Leitungskörper (2), der aus einem elektrisch leitenden Material gefertigt wird, und einer Kühlmittelleiteinheit, die zumindest teilweise in den Leitungskörper (2) integriert ist, und
- Einbringen des elektrischen Leiters (1) in eine oder mehrere der Nuten (5),
**dadurch gekennzeichnet, dass**
- der Leitungskörper (2) durch ein additives oder subtraktives Herstellungsverfahren gitterförmig ausgebildet wird,
- die Kühlmittelleiteinheit zum Teil durch Hohlräume des gitterförmigen Leitungskörpers (2) gebildet wird, und
- eine dichte Wandung der Kühlmittelleiteinheit in dem oder um den Leitungskörper (2), die bereichsweise einen Kühlmittelaustritt aus dem Leitungskörper (2) verhindert, angebracht wird.

10. Verfahren nach Anspruch 9, wobei für das Herstellen des elektrischen Leiters (1) eine Gitterstruktur dadurch ermittelt wird, dass sie hinsichtlich eines Strömungsparameters optimiert wird.

11. Verfahren nach Anspruch 9, wobei für das Herstellen des elektrischen Leiters (1) eine Gitterstruktur dadurch ermittelt wird, dass sie hinsichtlich eines Festigkeitsparameters optimiert wird.
